(19) **Europäisches Patentamt**

**European Patent Office**

**Office européen des brevets**

(11) **EP 1 521 490 A1**

(12) **EUROPÄISCHE PATENTANMELDUNG**

(43) Veröffentlichungstag:
06.04.2005 Patentblatt 2005/14

(51) Int Cl.⁷: **H04Q 7/38**, G01S 5/02, G01S 5/00

(21) Anmeldenummer: 04007568.1

(22) Anmeldetag: 29.03.2004

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(71) Anmelder: **SIEMENS AKTIENGESELLSCHAFT**
**80333 München (DE)**

(72) Erfinder:
• **Kuipers, Martin**
**13599 Berlin (DE)**
• **Meiling, Axel**
**13597 Berlin (DE)**

(54) **Verfahren zum Bestimmen einer Postition einer Teilnehmerstation eines Funkkommunikationssystems sowie Vorrichtung**

(57) Bei einem Verfahren zum Bestimmen einer Position einer Teilnehmerstation (UE) eines Funkkommunikationssystems sind für wenigstens zwei von der Teilnehmerstation (UE) empfangene Funkstationen (NodeB1, NodeB2, NodeB3, NodeB4) die jeweilige geografische Position und/oder ein Zellmittelpunkt (M1, M2, M3, M4) einer jeweiligen Funkzelle (FZ1, FZ2, FZ3, FZ4) bekannt. Erfindungsgemäß werden Gewichtungsfaktoren für die geografischen Positionen und/oder die Zellmittelpunkte (M1, M2, M3, M4) bestimmt und als Position der Teilnehmerstation (UE) wird ein Schwerpunkt (S) der gewichteten geografischen Positionen oder der gewichteten Zellmittelpunkte (M1, M2, M3, M4) der wenigstens zwei empfangenen Funkstationen (NodeB1, NodeB2, NodeB3, NodeB4) bestimmt.

EP 1 521 490 A1

**Beschreibung**

Die Erfindung betrifft ein Verfahren zum Bestimmen einer Position einer Teilnehmerstation eines Funkkommunikationssystems sowie eine entsprechende Vorrichtung.

In Funkkommunikationssystemen können Kunden mittels Teilnehmerstationen auf positionsabhängige Dienste (location based services) zugreifen. Positionsabhängige Dienste sind Dienste, die die momentane Position der entsprechenden Teilnehmerstationen berücksichtigen. Beispielsweise ist ein positionsabhängiger Dienst ein Navigationsdienst, der eine Route von dem momentanen Aufenthaltsort der Teilnehmerstation bis zu einem gewünschten Zielort ermittelt und auf einer mit der Teilnehmerstation verbundenen Ausgabevorrichtung darstellt.

Unter einem positionsabhängigen Dienst ist auch eine ortsbezogene Vergebührung von Kommunikationsverbindungen von Teilnehmerstationen eines Funkkommunikationssystems zu verstehen. Für eine Teilnehmerstation werden ein Bereich oder mehrere Bereiche festgelegt, für die jeweils oder insgesamt eine bestimmte Vergebührung von Kommunikationsverbindungen erfolgt. Hält sich die Teilnehmerstation in einem derart festgelegten Bereich auf, so werden Kommunikationsverbindungen anders vergebührt, als wenn sich die Teilnehmerstation außerhalb des Bereichs befindet. Derartige Bereiche sind beispielsweise unter den Bezeichnungen "Heimatfunkbereiche" oder "Homezones" bekannt.

Aus der DE 199 11 938 ist beispielsweise ein Verfahren bekannt, bei dem einer Teilnehmerstation eines Funkkommunikationssystems die Koordinaten eines für sie festgelegten Heimatfunkbereiches bekannt sind. Vor dem Aufbau einer Kommunikationsverbindung mit einer Funkstation des Funkkommunikationssystems empfängt die Teilnehmerstation eine Information über die geografische Lage (Koordinaten) der Funkstation und überprüft, ob sich die Funkstation innerhalb ihres Heimatfunkbereichs befindet. Ist die Funkstation innerhalb des Heimatfunkbereichs lokalisiert, wird dies auf einer Ausgabeeinheit der Teilnehmerstation visuell angezeigt und über diese Funkstation abgewickelte Kommunikationsverbindungen werden nachfolgend entsprechend einem dem Heimatfunkbereich zugeordneten Tarif vergebührt.

Das in der DE 199 11 938 beschriebene Verfahren hat jedoch den Nachteil, dass ein von einer Teilnehmerstation tatsächlich als Heimatfunkbereich genutzter Bereich mindestens so groß ist, wie die Fläche der Funkzelle, die eine Funkstation bedient, die sich innerhalb des Heimatfunkbereichs befindet. Das Verfahren geht nämlich auch dann davon aus, dass sich die Teilnehmerstation in ihrem Heimatfunkbereich befindet, wenn dies gar nicht der Fall ist. Dies liegt daran, dass das Verfahren die Position der Funkstation mit dem Heimatfunkbereich vergleicht und nicht die tatsächliche Position der Teilnehmerstation. Insbesondere in Funkkommunikationssystemen, in denen Funkstationen sehr große Funkzellen bedienen, können mit diesem Verfahren daher nur entsprechend sehr große Heimatfunkbereiche festgelegt bzw. verwendet werden. Für den Betreiber eines Funkkommunikationssystems ist es jedoch wünschenswert, eine beliebige und möglichst feine Strukturierung von Heimatfunkbereichen vornehmen zu können, um insbesondere eine differenzierte Vergebührung für Funkkommunikationsverbindungen vornehmen zu können.

Der Erfindung liegt die Aufgabe zugrunde, ein vorteilhaftes Verfahren sowie eine entsprechende Vorrichtung zum Bestimmen einer Position einer Teilnehmerstation eines Funkkommunikationssystems anzugeben, welche ermöglichen, die Position der Teilnehmerstation mit geringem Rechenaufwand zu bestimmen.

Die Aufgabe wird mit dem Verfahren sowie der Vorrichtung gemäß den unabhängigen Ansprüchen gelöst.

Vorteilhafte Weiterbildungen und Ausgestaltungen der Erfindung sind Gegenstand abhängiger Ansprüche.

Bei dem erfindungsgemäßen Verfahren zum Bestimmen einer Position einer Teilnehmerstation eines Funkkommunikationssystems sind für wenigstens zwei von der Teilnehmerstation empfangene Funkstationen die jeweilige geografische Position und/oder ein Zellmittelpunkt einer jeweiligen Funkzelle bekannt. Erfindungsgemäß werden Gewichtungsfaktoren für die geografischen Positionen und/oder die Zellmittelpunkte bestimmt und als Position der Teilnehmerstation wird ein Schwerpunkt der gewichteten geografischen Positionen oder der gewichteten Zellmittelpunkte der wenigstens zwei empfangenen Funkstationen bestimmt.

Durch die Erfindung wird ein Verfahren zur Positionsbestimmung einer Teilnehmerstation bereitgestellt, durch das mit geringem Rechenaufwand eine vergleichsweise grobe Positionsbestimmung für die Teilnehmerstation durchgeführt werden kann. Das Wort "grob" ist dahingehend zu verstehen, dass die erfindungsgemäße Positionsbestimmung eine Positionsgenauigkeit hat, die geringer ist, als beispielsweise bei einer Positionsbestimmung mittels eines satellitenbasierten Verfahrens. Je nach Anzahl empfangener Funkstationen liegt die Genauigkeit des erfindungsgemäßen Verfahrens beispielsweise zwischen 50 Metern und 500 Metern, wobei auch die Größe der Funkzellen, d.h. die Abstände zwischen den Funkstationen oder den Zellmittelpunkten die Genauigkeit beeinflusst.

Vorteilhafterweise wird durch einen Vergleich der Position der Teilnehmerstationen mit der geografischen Fläche wenigstens eines, der Teilnehmerstation zugeordneten Heimatfunkbereichs ermittelt, ob sich die Teilnehmerstation innerhalb des Heimatfunkbereiches befindet. Im Gegensatz zum Stand der Technik wird die Position der Teilnehmerstation ermittelt und überprüft, ob diese Position innerhalb der geografischen Fläche des Heimatfunkbereichs liegt. Die Erfindung ermöglicht eine einfache Positionsbestimmung der Teilnehmerstationen mit einer Genauigkeit, die ausreichend hoch ist, um einen Heimatfunkbereich zu verwenden, dessen Fläche kleiner ist als eine Funkzelle einer der empfangenen Funkstationen.

Es liegt im Rahmen der Erfindung, dass netzseitig eine Information, die einen Tarif für eine Vergebührung von Funkverbindungen der Teilnehmerstation zuordnet, in Abhängigkeit davon erzeugt wird, ob sich die Teilnehmerstation innerhalb ihres Heimatfunkbereichs befindet. Dem Betreiber des Funkkommunikationssystems wird dadurch ein einfaches Verfahren geboten, mittels dessen er dem Benutzer einer Teilnehmerstation einen ortsabhängigen Tarif anbieten kann. Beispielsweise können Kommunikationsverbindungen, d.h. Übertragungen von Signalisierungs- und/oder Nutzdaten über Funkverbindungen, innerhalb des Heimatfunkbereichs zu einem günstigeren Tarif vergebührt werden als Kommunikationsverbindungen, die außerhalb des Heimatfunkbereichs erfolgen.

Mit Vorteil ist für die wenigstens zwei von der Teilnehmerstation empfangenen Funkstationen jeweils ein Pfadverlust bekannt und die Pfadverluste werden zum Ermitteln der Gewichtungsfaktoren berücksichtigt. Pfadverluste sind netzseitig und/oder in der Teilnehmerstation beispielsweise aufgrund von Messungen der Teilnehmerstation bekannt. Die Messungen erfolgen beispielsweise mittels bekannter Signale, die von der jeweiligen Funkstation mit einer der Teilnehmerstation bekannten Sendeleistung gesendet werden. Der Pfadverlust ist die Differenz von Sendeleistung und Empfangsleistung.

Mit Vorteil erfolgt das Ermitteln der Position der Teilnehmerstationen in der Teilnehmerstation. Die Teilnehmerstation kann so selbst vor dem Aufbau einer Kommunikationsverbindung feststellen, ob sie sich in dem Heimatfunkbereich befindet. Durch ein entsprechendes akustisches oder optisches Signal, beispielsweise durch ein entsprechendes Symbol auf einem Bildschirm der Teilnehmerstation, wird dem Benutzer der Teilnehmerstation angezeigt, ob sich die Teilnehmerstation in dem Heimatfunkbereich befindet. Auf diese Weise kann der Benutzer der Teilnehmerstation den Aufbau einer Kommunikationsverbindung in Abhängigkeit von dieser Anzeige steuern. Der Aufbau bestimmter Kommunikationsverbindungen wird beispielsweise nur dann vom Benutzer initiiert, wenn sich die Teilnehmerstation in dem Heimatfunkbereich befindet.

Vorteilhafterweise werden die geografischen Positionen der empfangenen Funkstationen und/oder die entsprechenden Zellmittelpunkte über einen Funkkanal, insbesondere einen Rundsendekanal, des Funkkommunikationssystems von der Teilnehmerstation empfangen.

Alternativ oder zusätzlich erfolgt das Ermitteln der Position der Teilnehmerstation mit Vorteil in einer netzseitigen Vorrichtung des Funkkommunikationssystems. Auf diese Weise kann im Funkkommunikationssystem überprüft werden, ob sich die Teilnehmerstation tatsächlich in dem Heimatfunkbereich befindet, und entsprechend dem Ergebnis dieser Überprüfung beispielsweise eine Vergebührung von Kommunikationsverbindungen der Teilnehmerstation vorgenommen werden, oder dem Benutzer mittels der Teilnehmerstation der Empfang bestimmter Dienste angeboten werden. Durch eine Überprüfung der Position der Teilnehmerstation durch das Funkkommunikationssystem kann überprüft werden, ob die Teilnehmerstation beispielsweise aufgrund einer Manipulation, dem Funkkommunikationssystem fälschlicherweise mitteilt, dass sie sich im Heimatfunkbereich befindet.

Die erfindungsgemäße Vorrichtung weist alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

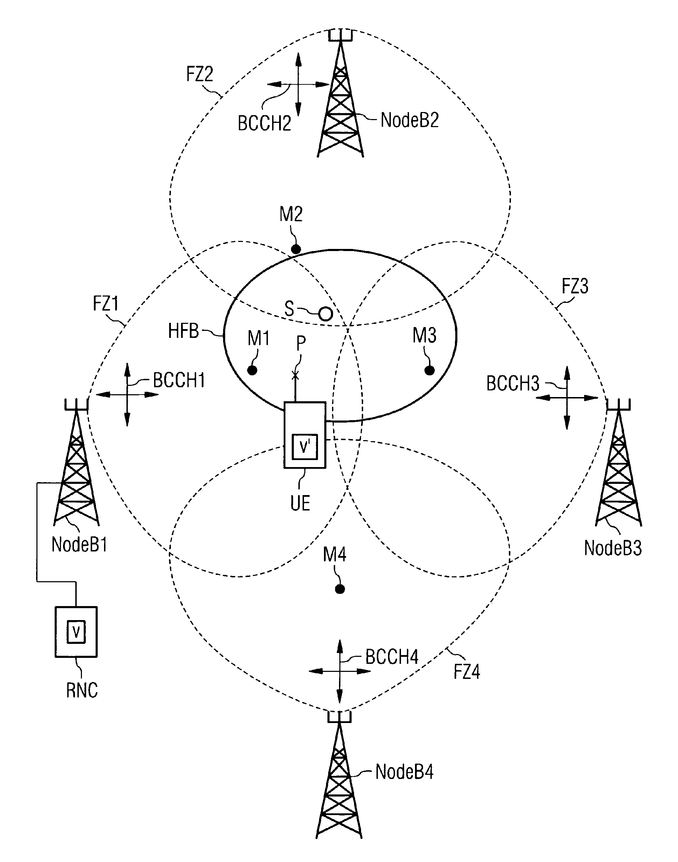

Die Erfindung wird im Folgenden anhand eines in der Figur dargestellten Ausführungsbeispiels näher erläutert.

Eine Teilnehmerstation ist beispielsweise ein Mobiltelefon, oder auch eine ortsbewegliche oder ortsfeste Vorrichtung zur Übertragung von Bild- und/oder Tondaten, zum Fax-, Short-Message-Service SMS-, Multimedia-Messaging-Service MMSund/oder Email-Versand und/oder zum Internetzugang.

Eine Funkstation ist eine netzseitige Einrichtung eines Funkkommunikationssystems, die Mittel aufweist, um mit einer Teilnehmerstation eine Funkverbindung aufzubauen und Nutzund/oder Signalisierungsdaten auszutauschen. Nachfolgend wird als Funkstation eine Basisstation betrachtet, ohne jedoch damit zum Ausdruck bringen zu wollen, dass die Erfindung hierauf beschränkt sein soll.

Die Erfindung kann vorteilhaft in beliebigen Funkkommunikationssystemen verwendet werden. Unter Funkkommunikationssystemen sind Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme, beispielsweise nach dem GSM-(Global System for Mobile Communications) oder dem UMTS- (Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of E-lectrical and Electronical Engineers) 802.11 a bis i, HiperLAN 1 und Hiper-LAN 2 (HiperLAN: High Performance Radio Local Area Network) sowie Bluetooth-Netze.

Im Folgenden wird die Erfindung am Beispiel eines Mobilfunksystems nach dem UMTS-Standard beschrieben, ohne jedoch damit zum Ausdruck bringen zu wollen, dass die Erfindung hierauf beschränkt sein soll.

Die Figur zeigt schematisch ein Funkkommunikationssystem mit einer ersten Basisstation NodeB1, der eine erste Funkzelle FZ1 und ein erster Rundsendekanal BCCH1 zugeordnet ist. Weiterhin sind schematisch eine zweite Basisstation NodeB2, eine dritte Basisstation NodeB3 und eine vierte Basisstation NodeB4 dargestellt, denen jeweils eine Funkzelle FZ2, FZ3, FZ4 und ein Rundsendekanal BCCH2, BCCH3, BCCH4 zugeordnet sind. Die Basisstationen NodeB1, NodeB2, NodeB3, NodeB4 sind derart ausgebildet, dass sie mit Teilnehmerstationen, die sich in den entsprechenden Funkzellen FZ1, FZ2, FZ3, FZ4 befinden, Kommunikationsverbindungen unterhalten können. Auf den Rundsendekanälen BCCH1, BCCH2, BCCH3, BCCH4 senden die Basisstationen NodeB1, NodeB2, NodeB3, NodeB4 beispielsweise Informationen, die von den Teilnehmerstationen benötigt werden, um in der entsprechenden Funkzelle FZ1, FZ2, FZ3, FZ4 mit der jeweiligen Basisstation NodeB1, NodeB2, NodeB3, NodeB4 Funkverbindungen aufbauen und aufrechterhalten zu können. Weiterhin empfangen Teilnehmerstationen, die sich in Funkreichweite der einer Basisstation befinden, auf dem jeweiligen Rundsendekanal BCCH1, BCCH2, BCCH3, BCCH4 Signale, anhand derer Eigenschaften eines Übertragungskanals, beispielsweise ein Pfadverlust, ermittelt werden können. In Funkreichweite einer Basisstation ist eine Teilnehmerstation dann, wenn sie Signale auf dem entsprechenden Rundsendekanal mit einer Empfangsleistung empfängt, die ausreicht, um das Signal von Signalen anderer Basisstationen und vom Rauschen zu unterscheiden. Eine Teilnehmerstation kann sich somit außerhalb einer Funkzelle und dennoch in Funkreichweite einer Basisstation befinden.

Die Basisstationen NodeB1, NodeB2, NodeB3, NodeB4 sind jeweils mit einem Funkzugangscontroller verbunden, über den ein Datenaustausch mit einem nicht dargestellten Kernnetz (core network) und daran angeschlossenen Netzen (z. B. Telefonfestnetz oder Internet) erfolgen kann. Der Übersichtlichkeit halber ist nur ein Funkzugangscontroller RNC dargestellt, der mit der ersten Basisstation NodeB1 verbunden ist. Auch die Verbindung des Funkzugangscontrollers RNC ins Kernnetz wurde aus Gründen der Übersichtlichkeit nicht dargestellt. Der Funkzugangscontroller RNC weist eine Vorrichtung V auf, die insbesondere zum Ermitteln von Positionen von Teilnehmerstationen ausgebildet ist, die von der ersten Basisstation NodeB1 in der ersten Funkzelle FZ1 bedient werden.

Die Figur zeigt weiterhin für jede der Funkzellen FZ1, FZ2, FZ3, FZ4 einen Zellmittelpunkt M1, M2, M3, M4. Die Zellmittelpunkte M1, M2, M3, M4 sind beispielsweise mit Hilfe von Netzwerkplanungsprogrammen anhand der jeweils versorgten Fläche der Funkzellen FZ1, FZ2, FZ3, FZ4 bestimmt worden.

Eine schematisch dargestellte Teilnehmerstation UE verfügt über eine Steuereinheit V' und befindet sich innerhalb der ersten Funkzelle FZ1 an einem Ort P. Der Teilnehmerstation UE ist ein Heimatfunkbereich HFB zugeordnet, der in der Figur schematisch dargestellt ist. Selbstverständlich kann ein Heimatfunkbereich eine beliebige Form haben. Ein Heimatfunkbereich ist beispielsweise eine netzseitig festgelegte Fläche, innerhalb derer der Betreiber des Funkkommunikationssystems bestimmte Dienste anbietet und/oder wenigstens einen bestimmten Tarif für die Vergebührung von Kommunikationsverbindungen vorsieht. Befindet sich die Teilnehmerstation UE in ihrem Heimatfunkbereich HFB, so kann sie auf die dort angebotenen Dienste des Funkkommunikationssystems zugreifen und die Vergebührung von Kommunikationsverbindungen erfolgt mit einem dem Heimatfunkbereich HFB zugeordneten Tarif. Befindet sich die Teilnehmerstation UE außerhalb ihren Heimatfunkbereichs HFB sieht der Betreiber des Funkkommunikationssystems einen anderen Tarif für die Vergebührung von Kommunikationsverbindungen in der Teilnehmerstation UE vor und/oder bietet der Teilnehmerstation zumindest teilweise andere Dienste an, als innerhalb des Heimatfunkbereichs HFB.

Zur Festlegung der Fläche des Heimatfunkbereichs HFB ist insbesondere vorgesehen, dass Wünsche des Benutzers der Teilnehmerstation vom Betreiber des Funkkommunikationssystems berücksichtigt werden. Zu diesem Zweck können während der Festlegung des Heimatfunkbereichs HFB entsprechende Informationseinheiten zwischen der Teilnehmerstation UE und dem Funkkommunikationssystem beispielsweise über die erste Basisstation NodeB1 ausgetauscht werden. Selbstverständlich kann für die Teilnehmerstation MS mehr als ein Heimatfunkbereich festgelegt sein. Für die Heimatfunkbereiche können sowohl gleiche, als auch unterschiedliche Vergebührungsmodelle verwendet werden und/oder Dienste angeboten werden.

Die Teilnehmerstation UE ist in Funkreichweite der ersten, zweiten, dritten und vierten Basisstation NodeB1, NodeB2, NodeB3, NodeB4, empfängt auf den vier Rundsendekanälen BCCH1, BCCH2, BCCH3, BCCH4 Signale von den Basisstationen NodeB1, NodeB2, NodeB3, NodeB4 und ermittelt anhand der Signale jeweils einen Pfadverlust. Zusätzlich empfängt die Teilnehmerstation UE auf den Rundsendekanälen BCCH1, BCCH2, BCCH3, BCCH4 Informationen, denen die geografischen Positionen der Basisstationen NodeB1, NodeB2, NodeB3, NodeB4 und/oder die Zellmittelpunkte M1, M2, M3, M4 der Funkzellen FZ1, FZ2, FZ3, FZ4 entnehmbar sind.

Die Teilnehmerstation UE ermittelt mit ihrer Steuereinheit V' sowohl vor einem Aufbau einer Funkverbindung mit der sie bedienenden ersten Basisstation NodeB1 als auch während einer Funkverbindung ihre Position als Schwerpunkt der gewichteten geografischen Positionen der Basisstationen NodeB1, NodeB2, NodeB3, NodeB4. Alternativ oder zusätzlich ermittelt die Teilnehmerstation UE ihre Position anhand der gewichteten Zellmittelpunkte M1, M2, M3, M4.

Die Gewichtungsfaktoren für die geografischen Positionen der Basisstationen NodeB1, NodeB2, NodeB3, NodeB4 ermittelt die Steuereinheit V' der Teilnehmerstation UE anhand der für Signale der Basisstationen NodeB1, NodeB2, NodeB3, NodeB4 ermittelten Pfadverluste.

Ein Pfadverlustmodell wird beispielsweise durch die Formel

$$x = \frac{d^{\alpha}}{\beta}$$

beschrieben. Hierbei ist x der Pfadverlust, d die Distanz zwischen der Teilnehmerstation und der entsprechenden Basisstation, $\alpha$ ein Dämpfungsexponent und $\beta$ ein für das Funkkommunikationssystem spezifischer Parameter. Der Teilnehmerstation UE sind die Pfadverluste für Signale der Basisstationen NodeB1, NodeB2, NodeB3, NodeB4 sowie der Dämpfungsexponent und der netzwerkabhängige Parameter Beta bekannt. Anhand der angegebenen Formel kann für jede Basisstation NodeB1, NodeB2, NodeB3, NodeB4 ein Wert für die Entfernung zur Teilnehmerstation UE ermittelt werden. Die Gewichtungsfaktoren für die geografischen Positionen der Basisstationen NodeB1, NodeB2, NodeB3, NodeB4 werden dann so festgelegt, dass die geografische Position derjenigen Basisstation, die die kleinste Entfernung zur Teilnehmerstation UE hat am stärksten gewichtet wird. Mittels obiger Formel kann auch das Verhältnis der einzelnen Entfernungen zwischen Basisstationen und Teilnehmerstation UE ermittelt werden. Die Gewichtsfaktoren werden weiterhin so festgelegt, dass sie die gleichen Verhältnisse zueinander haben wie die entsprechenden Entfernungen.

Bei der Ermittlung des Schwerpunkts anhand der gewichteten geografischen Positionen der Basisstationen NodeB1, NodeB2, NodeB3, NodeB4 ergibt sich in der Figur ein Schwerpunkt S als ermittelte Position für die Teilnehmerstation UE. Der Schwerpunkt S weicht geringfügig von dem Ort P, der tatsächlichen Position der Teilnehmerstation UE, ab, da die Schwerpunktbildung mit Ungenauigkeiten bei der Ermittlung der Gewichtungsfaktoren der geografischen Positionen behaftet ist. Die Abweichung des Schwerpunktes S vom Ort P ist jedoch gering im Vergleich mit der Fläche des Heimatfunkbereichs HFB. Dies wird beispielsweise dadurch erreicht, dass netzseitig in Abhängigkeit von der Fläche des Heimatfunkbereichs eine Mindestanzahl von Basisstation vorgegeben wird, die zur Positionsbestimmung berücksichtigt werden müssen. Weiterhin kann die Mindestanzahl an Basisstationen vor Genauigkeit des Pfadverlustmodels abhängen, das zum Ermitteln der Gewichtungsfaktoren verwendet wird.

Die Teilnehmerstation UE vergleicht den als Position ermittelten Schwerpunkt S mit der Fläche ihres Heimatfunkbereichs HFB und stellt fest, dass sie sich innerhalb ihres Heimatfunkbereichs HFB befindet. Einem Benutzer der Teilnehmerstation UE wird der Aufenthalt in dem Heimatfunkbereich beispielsweise durch ein akustisches Signal und/oder die Anzeige eines entsprechenden Symbols auf einer Anzeigevorrichtung der Teilnehmerstation mitgeteilt. Bei einem Aufbau einer Funkverbindung teilt die Teilnehmerstation dem Funkkommunikationssystem durch eine entsprechende Nachricht mit, dass sie sich in ihrem Heimatfunkbereich befindet. Nachfolgend wird beispielsweise in der Vorrichtung V des Funkzugangskontrollers eine Information erzeugt, die der Funkverbindung einen dem Heimatfunkbereich zugeordneten Tarif zuordnet und an eine Vergebührungseinheit übermittelt.

Selbstverständlich kann die Position der Teilnehmerstation alternativ oder zusätzlich in der Vorrichtung V des Funkzugangscontrollers RNC ermittelt werden. In diesem Fall übermittelt die Teilnehmerstation UE die von ihr gemessenen Pfadverluste oder entsprechende Signale, denen die Pfadverluste entnommen werden können oder die von ihr ermittelten Gewichtungsfaktoren an die erste Basisstation NodeB1 zum Weiterleiten an den Funkzugangskontroller RNC. In der Vorrichtung V des Funkzugangskontrollers RNC werden gegebenenfalls die Gewichtungsfaktoren ermittelt und die Position der Teilnehmerstation UE anhand der in der Vorrichtung bekannten geografischen Positionen und/oder Zellmittelpunkte M1, M2, M3, M4 wie zuvor beschrieben durch Schwerpunktbildung ermittelt.

Selbstverständlich kann eine Vorrichtung zum Ermitteln der Position der Teilnehmerstation auch in der ersten Basisstation NodeB1 oder in einer Vorrichtung innerhalb des nicht dargestellten Kernnetzes angeordnet sein.

In einem nicht dargestellten Ausführungsbeispiel ermitteln die Steuereinheit V' und/oder die Vorrichtung V die Position der Teilnehmerstation UE sowohl anhand der gewichteten Positionen der Basisstationen NodeB1, NodeB2, NodeB3, NodeB4, als auch anhand der gewichteten Zellmittelpunkte M1, M2, M3, M4. Auf diese Weise ergeben sich im Allgemeinen zwei nicht übereinstimmende Schwerpunkte und die Steuereinheit V' und/oder die Vorrichtung V stellen nur dann fest, dass sich die Teilnehmerstation in ihrem Heimatfunkbereich HFB befindet, wenn beide Schwerpunkte innerhalb der Fläche des Heimatfunkbereichs HFB liegen.

Eine Information für die Teilnehmerstation UE über ihre Heimatfunkbereiche kann auf einer SIM-Karte (SIM: Subscriber I-dentity Module), beispielsweise bei kreisförmigen Heimatfunkbereichen jeweils unter Verwendung eines Kreismittelpunktes und eines Radius, gespeichert sein. Zusätzlich liegt es im Rahmen der Erfindung, diese Information auf Anforderung einer netzseitigen Einrichtung und/oder auf Anforderung der Teilnehmerstation UE verändern zu können. Sowohl der Betreiber des Funkkommunikationssystems als auch der Benutzer der Teilnehmerstation, können entsprechende Signale austauschen, anhand derer eine neue Festlegung eines Heimatfunkbereiches erfolgt. Heimatfunkbereiche können dadurch flexibel an die Bedürfnisse des Netzbetreibers und/oder des Benutzers der Teilnehmerstation UE angepasst werden.

## Patentansprüche

1. Verfahren zum Bestimmen einer Position einer Teilnehmerstation (UE) eines Funkkommunikationssystems, bei dem für wenigstens zwei von der Teilnehmerstation empfangene Funkstationen (NodeB1, NodeB2, NodeB3, NodeB4) die jeweilige geografische Position und/oder ein Zellmittelpunkt (M1, M2, M3, M4) einer jeweiligen Funkzelle (FZ1, FZ2, FZ3, FZ4) bekannt sind,
**dadurch gekennzeichnet,**
**dass** Gewichtungsfaktoren für die geografischen Positionen und/oder die Zellmittelpunkte (M1, M2, M3, M4) bestimmt werden und als Position der Teilnehmerstation (UE) ein Schwerpunkt (S) der gewichteten geografischen Positionen oder der gewichteten Zellmittelpunkte (M 1, M2, M3, M4) der wenigstens zwei empfangenen Funkstationen (NodeB1, NodeB2, NodeB3, NodeB4) bestimmt wird.

2. Verfahren nach Anspruch 1,
**dadurch gekennzeichnet,**
**dass** durch einen Vergleich der Position (S) der Teilnehmerstation (UE) mit der geografischen Fläche wenigstens eines der Teilnehmerstation (UE) zugeordneten Heimatfunkbereichs (HFB) ermittelt wird, ob sich die Teilnehmerstation (UE) innerhalb des Heimatfunkbereiches (HFB) befindet.

3. Verfahren nach Anspruch 2,
**dadurch gekennzeichnet,**
**dass** netzseitig eine Information, die einen Tarif für eine Vergebührung von Funkverbindungen der Teilnehmerstation (UE) zuordnet, in Abhängigkeit davon erzeugt wird, ob sich die Teilnehmerstation (UE) innerhalb ihres Heimatfunkbereichs (HFB) befindet.

4. Verfahren nach einem der Ansprüche 1 bis 3,
**dadurch gekennzeichnet,**
**dass** für die wenigstens zwei von der Teilnehmerstation (UE) empfangene Funkstationen (NodeB1, NodeB2, NodeB3, NodeB4) jeweils ein Pfadverlust bekannt ist und die Pfadverluste zum Ermitteln der Gewichtungsfaktoren berücksichtigt werden.

5. Verfahren nach einem der Ansprüche 1 bis 4,
**dadurch gekennzeichnet,**
**dass** das Ermitteln der Position der Teilnehmerstation (UE) in der Teilnehmerstation (UE) erfolgt.

6. Verfahren nach Anspruch 5,
**dadurch gekennzeichnet,**
**dass** die geografischen Positionen der empfangenen Funkstationen (NodeB1, NodeB2, NodeB3, NodeB4) und/oder die entsprechenden Zellmittelpunkte (M1, M2, M3, M4) über einen Funkkanal (BCCH1, BCCH2, BCCH3, BCCH4), insbesondere einen Rundsendekanal, des Funkkommunikationssystem von der Teilnehmerstation (UE) empfangen werden.

7. Verfahren nach einem der Ansprüche 1 bis 6,
**dadurch gekennzeichnet,**
**dass** das Ermitteln der Position der Teilnehmerstation (UE) in einer netzseitigen Vorrichtung (V) des Funkkommunikationssystems erfolgt.

8. Vorrichtung (V, V') zum Bestimmen einer Position einer Teilnehmerstation (UE) eines Funkkommunikationssystems, bei dem für wenigstens zwei von der Teilnehmerstation (UE) empfangene Funkstationen (NodeB1, NodeB2, NodeB3, NodeB4) die jeweilige geografische Position und/oder ein Zellmittelpunkt (M1, M2, M3, M4) einer jeweiligen Funkzelle (FZ1, FZ2, FZ3, FZ4) bekannt sind,
**dadurch gekennzeichnet,**
**dass** die Vorrichtung (V, V') derart ausgebildet ist, dass sie Gewichtungsfaktoren für die geografischen Positionen und/oder die Zellmittelpunkte (M1, M2, M3, M4) bestimmt und als Position der Teilnehmerstation (UE) ein Schwerpunkt (S) der gewichteten geografischen Positionen oder der gewichteten Zellmittelpunkte (M1, M2, M3, M4) der wenigstens zwei empfangenen Funkstationen (NodeB1, NodeB2, NodeB3, NodeB4) bestimmt.

9. Vorrichtung (V, V') nach Anspruch 8,
**dadurch gekennzeichnet,**
**dass** die Vorrichtung (V, V') derart ausgebildet ist, dass sie durch einen Vergleich der Position der Teilnehmerstation (UE) mit der geografischen Fläche wenigstens eines der Teilnehmerstation (UE) zugeordneten Heimatfunkbereichs (HFB) ermittelt, ob sich die Teilnehmerstation (UE) innerhalb des Heimatfunkbereiches (HFB) befindet.

10. Vorrichtung (V, V') nach einem der Ansprüche 8 oder 9,
**dadurch gekennzeichnet,**
**dass** die Vorrichtung (V, V') derart ausgebildet ist, dass sie für die wenigstens zwei von der Teilnehmerstation (UE) empfangenen Funkstationen (NodeB1, NodeB2, NodeB3, NodeB4) jeweils bekannte Pfadverluste zum Ermitteln der Gewichtungsfaktoren berücksichtigt.

# EP 1 521 490 A1

**Europäisches Patentamt**

## EUROPÄISCHER RECHERCHENBERICHT

Nummer der Anmeldung

EP 04 00 7568

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 03/071303 A (SOMMER MAGNUS ; TELIA AB (SE)) 28. August 2003 (2003-08-28)<br>* Zusammenfassung *<br>* Ansprüche 1-13 *<br>* Abbildungen 12,14,15 *<br>* Seite 2, Zeile 31 - Zeile 34 *<br>* Seite 3, Zeile 1 - Zeile 30 *<br>* Seite 12, Zeile 17 - Seite 14, Zeile 29 *<br>* Seite 15, Zeile 34 - Seite 17, Zeile 19 *<br>* Seite 20, Zeile 25 - Seite 22, Zeile 4 *<br>----- | 1-10 | H04Q7/38<br>G01S5/02<br>G01S5/00 |
| E | WO 2004/049632 A (DOOLEY SAUL R ; KONINKL PHILIPS ELECTRONICS NV (NL))<br>10. Juni 2004 (2004-06-10)<br>* Zusammenfassung *<br>* Ansprüche 1,4 *<br>* Abbildungen 1-4 *<br>* Seite 6, Zeile 4 - Zeile 24 *<br>----- | 1-10 | |
| X | WO 2004/016032 A (QUALCOMM INC)<br>19. Februar 2004 (2004-02-19)<br>* Zusammenfassung *<br>* Abbildungen 3-8 *<br>* Absatz [1058] - Absatz [1063] *<br>* Absatz [1073] - Absatz [1084] *<br>----- | 1-10 | **RECHERCHIERTE SACHGEBIETE (Int.Cl.7)**<br><br>H04Q<br>G01S |
| A | US 2002/148771 A1 (IWATA YOSHIFUMI ET AL)<br>17. Oktober 2002 (2002-10-17)<br>* Zusammenfassung *<br>* Anspruch 17 *<br>* Abbildungen 1,3 *<br>* Absatz [0005] - Absatz [0006] *<br>* Absatz [0038] *<br>* Absatz [0055] - Absatz [0058] *<br>----- | 1-10 | |

Der vorliegende Recherchenbericht wurde für alle Patentansprüche erstellt

| Recherchenort | Abschlußdatum der Recherche | Prüfer |
|---|---|---|
| München | 9. August 2004 | Matt, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes Dokument

EPO FORM 1503 03.82 (P04C03)

8

**ANHANG ZUM EUROPÄISCHEN RECHERCHENBERICHT
ÜBER DIE EUROPÄISCHE PATENTANMELDUNG NR.**

EP 04 00 7568

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-08-2004

| Im Recherchenbericht angeführtes Patentdokument | | Datum der Veröffentlichung | Mitglied(er) der Patentfamilie | | Datum der Veröffentlichung |
|---|---|---|---|---|---|
| WO 03071303 | A | 28-08-2003 | SE | 0200548 A | 26-08-2003 |
| | | | WO | 03071303 A1 | 28-08-2003 |
| WO 2004049632 | A | 10-06-2004 | WO | 2004049632 A1 | 10-06-2004 |
| WO 2004016032 | A | 19-02-2004 | WO | 2004016032 A1 | 19-02-2004 |
| US 2002148771 | A1 | 17-10-2002 | JP | 3247093 B2 | 15-01-2002 |
| | | | JP | 2000213325 A | 02-08-2000 |
| | | | DE | 10000952 A1 | 03-08-2000 |
| | | | US | 2002148770 A1 | 17-10-2002 |
| | | | US | 6428699 B1 | 06-08-2002 |

Für nähere Einzelheiten zu diesem Anhang : siehe Amtsblatt des Europäischen Patentamts, Nr.12/82